(19) Europäisches Patentamt
European Patent Office
Office européen des brevets

(11) **EP 4 538 243 A1**

(12) **EUROPEAN PATENT APPLICATION**
published in accordance with Art. 153(4) EPC

(43) Date of publication:
**16.04.2025 Bulletin 2025/16**

(21) Application number: **23842187.9**

(22) Date of filing: **13.07.2023**

(51) International Patent Classification (IPC):
***C03C 10/12*** (2006.01)     ***C03C 10/04*** (2006.01)
***C03C 21/00*** (2006.01)

(52) Cooperative Patent Classification (CPC):
**C03B 25/00; C03B 32/02; C03C 3/097;**
**C03C 10/00; C03C 21/00; H04M 1/18**

(86) International application number:
**PCT/CN2023/107103**

(87) International publication number:
**WO 2024/017122 (25.01.2024 Gazette 2024/04)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **22.07.2022 CN 202210869057**

(71) Applicants:
- **Chongqing Aureavia Hi-Tech Glass Co., Ltd.**
  **Chongqing 400714 (CN)**
- **Huawei Technologies Co., Ltd.**
  **Shenzhen, Guangdong 518129 (CN)**

(72) Inventors:
- **HUANG, Hao**
  **Chongqing 400714 (CN)**

- **LU, Guangyu**
  **Chongqing 400714 (CN)**
- **ZHOU, Jingpeng**
  **Chongqing 400714 (CN)**
- **TIAN, Qian**
  **Chongqing 400714 (CN)**
- **CHEN, Jiejie**
  **Shenzhen, Guangdong 518129 (CN)**
- **ZHU, Guangxiang**
  **Shenzhen, Guangdong 518129 (CN)**
- **HUANG, Yihong**
  **Shenzhen, Guangdong 518129 (CN)**

(74) Representative: **Staeger & Sperling**
**Partnerschaftsgesellschaft mbB**
**Sonnenstraße 19**
**80331 München (DE)**

(54) **STRENGTHENED MICROCRYSTALLINE GLASS, PREPARATION METHOD THEREFOR, AND USE THEREOF**

(57) Provided in the present application are a strengthened microcrystalline glass, a preparation method therefor, and the use thereof. The strengthened microcrystalline glass comprises a petalite crystal phase and a lithium disilicate crystal phase. The strengthened microcrystalline glass has a compressive stress layer, which is formed by chemical strengthening, on the surface and has a tensile stress layer on the inside. The strengthened microcrystalline glass satisfies: $(CS\_50/DOL\_0) \geq 0.332 \times$ (surface $CS/|CT\_CV|$); $DOL\_0 \geq 0.187t$; $1.01\% \geq \Delta\alpha \geq 0.65\%$; and $\Delta\alpha = 5 \times 10^{-5} \times |CT\_AV| + 0.0026$. Under the condition of 80-mesh abrasive paper, the average height of drop failure of the strengthened microcrystalline glass can reach 1.30-1.80 m. Compared with the prior art, the strengthened microcrystalline glass of the present application has remarkable improvement in drop resistance on rough ground, and therefore can be used as a material for protection cover plates of smart terminal products, such as mobile phones.

**(Cont. next page)**

FIG. 1

**Description**

**RELATED APPLICATION**

This application claims the priority to the prior application document No. CN202210869057.X filed before the China National Intellectual Property Administration on July 22, 2022, which is incorporated herein in its entirety.

**TECHNICAL FIELD**

The present application relates to the field of lithium-aluminum-silica glass-ceramic, and in particular, to a glass-ceramic with excellent drop resistance and a preparation method thereof.

**BACKGROUND**

With the advent of the smart era of a mobile phone, the mobile phones have become an indispensable communication tool in daily life. As the number of mobile phone users is increasing year by year, in order to meet the requirements of mobile phone users and increase their experience, the speed of updating, transformation and elimination of mobile phones is also increasing. With the gradual thinning of mobile phones, the performance requirements of their cover glass are gradually improved. Among them, a glass-ceramic with petalite and lithium disilicate as a main crystalline phase can achieve a crystallinity of more than 70 wt%, and the transmittance in the optical band of 360 nm to 740 nm is close to that of the commonly used lithium-aluminum-silica glass. It can also be chemically strengthened in a salt bath to further improve its mechanical properties such as drop resistance and impact resistance. Therefore, it stands out and has attracted wide attention in the cover glass industry.

The reason why the cover glass is broken during use is usually caused by the collision between the cover glass and sharp objects (such as fine sand, cement, and pebbles) due to dropping from a height. A glass surface is partially damaged, and a micro-crack is formed at a damage point, and the crack extend from the glass surface to internal expansion. When the crack extend through a depth of a compressive stress layer on the glass surface and reach a tensile stress layer, the crack will rapidly expand in a tensile stress zone, making the crack penetrate the whole glass, thus resulting in breakage and fracture of the glass.

The existing patented glass-ceramic with petalite and lithium disilicate as a main crystalline phase, which mainly inhibits crack propagation by improving CT and DOL_0 after strengthening to improve a damage resistance of the glass.

CN201980020541.1 discloses that an absolute value of the maximum compressive stress on a surface is 1.8 to 2.2 times of the absolute value of the maximum central tensile stress obtained by a specific strengthening method, and a maximum CT value reaches 140 MPa.

CN202010348413.4 discloses that through two-step mixed salt strengthening, a maximum CT value reaches 120 MPa, DOL_0≥100 $\mu$m, and a maximum linear density of tensile stress reaches 50000 MPa/mm.

**SUMMARY**

It is regrettable that the drop resistance of such glass is still inadequate, making it challenging to meet the performance requirements of high-end mobile phones at present.

In view of the problem that the drop resistance of the glass-ceramic in the prior art cannot meet the demand, the inventors, after much research, provide a glass-ceramic with more excellent drop resistance, the drop resistance of which is significantly improved compared to the prior art.

Specifically, the present application provides the following technical solutions.

1. A strengthened glass-ceramic, comprising a petalite crystalline phase and a lithium disilicate crystalline phase, and the strengthened glass-ceramic has a compressive stress layer formed by chemical strengthening on a surface and a tensile stress layer inside; and

in the strengthened glass-ceramic:

DOL_0≥0.187 t, t is a thickness of the strengthened glass-ceramic;

$$1.01\% \geq \Delta\alpha \geq 0.65\%, \ \Delta\alpha = 5 \times 10^{-5} \times |CT\_AV| + 0.0026;$$

$$(CS\_50/DOL\_0) \geq 0.332 \times (\text{surface } CS/|CT\_CV|);$$

wherein:
surface CS: surface compressive stress, measured in MPa;
CS_50: compressive stress at a depth of 50 $\mu$m from a glass surface, measured in MPa;
CT_AV: average tensile stress in the tensile stress layer, measured in MPa;
CT_CV: maximum tensile stress in the tensile stress layer, measured in MPa; and
DOL_0: a depth of the compressive stress layer, measured in $\mu$m.

2. The strengthened glass-ceramic according to technical solution 1, wherein the tensile stress layer of the strengthened glass-ceramic comprises the following oxides by weight percentages:

$SiO_2$: 65.00% to 75.00%,
$Al_2O_3$: 5.00% to 10.00%,
$P_2O_5$: 1.00% to 5.00%,
CaO: 0.10% to 3.00%,
$ZrO_2$: 1.00% to 10.00%,
$Na_2O$: 0% to 5.00%,
$Li_2O$: 5.00% to 15.00%,
$K_2O$: 0.10% to 3.00%, and
$B_2O_3$: 0% to 4.00%.

3. The strengthened glass-ceramic according to technical solution 1, wherein the tensile stress layer of the strengthened glass-ceramic comprises the following oxides by weight percentages:

$SiO_2$: 68.00% to 72.00%,
$Al_2O_3$: 5.00% to 10.00%,
$P_2O_5$: 1.00% to 3.00%,
CaO: 0.10% to 1.00%,
$ZrO_2$: 2.00% to 8.00%,
$Na_2O$: 0% to 1.00%,
$Li_2O$: 8.00% to 13.00%,
$K_2O$: 0.10% to 1.00%, and
$B_2O_3$: 0% to 2.00%.

4. The strengthened glass-ceramic according to technical solution 1, wherein the tensile stress layer of the strengthened glass-ceramic comprises the following oxides by weight percentages:

$SiO_2$: 70.00% to 72.00%,
$Al_2O_3$: 6.00% to 8.00%,
$P_2O_5$: 1.50% to 3.00%,
CaO: 0.50% to 1.00%,
$ZrO_2$: 5.00% to 7.00%,
$Na_2O$: 0.05% to 0.60%,
$Li_2O$: 9.00% to 12.00%,
$K_2O$: 0.10% to 0.50%, and
$B_2O_3$:0.10% to 1.00%.

5. The strengthened glass-ceramic according to technical solution 1, wherein the tensile stress layer of the strengthened glass-ceramic comprises the following oxides by weight percentages:

$SiO_2$: 70.06% to 71.65%,
$Al_2O_3$: 7.24% to 7.43%,
$P_2O_5$: 2.49% to 2.83%,
CaO: 0.77% to 0.98%,
$ZrO_2$: 5.40% to 6.11%,
$Na_2O$: 0.06% to 0.31%,
$Li_2O$: 11.10% to 11.95%,
$K_2O$: 0.13% to 0.37%, and
$B_2O_3$: 0.21% to 0.91%.

6. The strengthened glass-ceramic according to any one of technical solutions 1 to 5, wherein a total content of petalite crystalline phase and lithium disilicate crystalline phase in the strengthened glass-ceramic is greater than or equal to 75 wt%.

7. The strengthened glass-ceramic according to any one of technical solutions 1 to 6, wherein the strengthened glass-ceramic has an average sandpaper drop resistance height of between 1.30 m and 1.80 m when the strengthened glass-ceramic with a thickness of 0.7 mm is tested for sandpaper drop resistance with an 80-mesh sandpaper.

8. The strengthened glass-ceramic according to any one of technical solutions 1 to 7, wherein the strengthened glass-ceramic with a thickness of 0.7 mm is transparent and has a transmittance of not less than 90.00% for light at a wavelength of 550 nm.

9. A preparation method of the strengthened glass-ceramic according to any one of technical solutions 1 to 8, comprising the following steps:

(1) preparing a base glass: mixing glass raw materials, adding with a clarifying agent, and forming the base glass by melt molding and annealing;
(2) preparing a glass-ceramic: subjecting the base glass obtained in step (1) to a nucleation treatment and a crystallization treatment to obtain the glass-ceramic;
(3) subjecting the glass-ceramic obtained in step (2) to cold working to obtain a polished sheet; and
(4) subjecting the polished sheet obtained in step (3) to chemical strengthening to obtain a strengthened glass-ceramic.

10. The preparation method according to technical solution 9, wherein in step (1), an annealing temperature is 450°C to 600°C, preferably 450°C to 550°C, and an annealing time is 6 hours to 240 hours, preferably 6 hours to 120 hours. The annealing can be divided into four stages: heating, holding, slow cooling and rapid cooling. Theoretically, at a certain temperature, the longer the annealing time, the less the residual stress, but considering the time cost, the time should not be too long. Different specifications of sample bricks need different annealing time to reduce a thermal stress of sample bricks to an usable range, and the larger the size of sample bricks, the longer the annealing time.

11. The preparation method according to technical solution 9 or 10, wherein in step (2), the nucleation temperature is 500°C to 700°C, preferably 540°C to 570°C, and preferably, nucleation time is 10 min to 1440 min.

12. The preparation method according to technical solution 11, wherein in step (2), during the nucleation treatment, the temperature is raised to the nucleation temperature at a heating rate of 5°C/min to 20°C/min, preferably at a heating rate of 10°C/min.

13. The preparation method according to any one of technical solutions 9 to 12, wherein in step (2), during the crystallization treatment, the crystallization temperature is 640°C to 750°C, preferably 660°C to 740°C, or 670°C to 740°C, and preferably, the crystallization treatment time is 5 min to 1440 min.

14. The preparation method according to technical solution 13, wherein in step (2), during the crystallization treatment, the temperature is raised to the crystallization temperature at a heating rate of 5°C/min to 20°C/min, preferably at a heating rate of 10°C/min.

15. The preparation method according to any one of technical solutions 9 to 14, wherein step (4) is performed by subjecting the polished sheet obtained in step (3) to chemical strengthening in a pure sodium salt or a lithium-sodium-potassium mixed salt bath at 380°C to 550°C, for a strengthening time of preferably 1 h to 24 h.

16. The preparation method according to technical solution 15, wherein in step (4), a sodium ion in the salt bath is provided by one or more of sodium nitrate, sodium sulfate, and sodium carbonate; a potassium ion in the salt bath is provided by one or more of potassium nitrate, potassium sulfate, and potassium carbonate; and a lithium ion in the salt bath is provided by one or more of lithium nitrate, lithium sulfate, and lithium carbonate.

17. The preparation method according to technical solution 15 or 16, wherein the lithium-sodium-potassium mixed salt bath comprises the following components in terms of mass percentage: 0.1 wt% to 100 wt% of $NaNO_3$ and 0 wt% to 99.9 wt% of $KNO_3$; and further comprises 0 wt% to 10 wt% of $LiNO_3$ based on a total mass of $NaNO_3$ and $KNO_3$.

18. The preparation method according to technical solution 15 or 16, wherein the lithium-sodium-potassium mixed salt bath comprises the following components in terms of mass percentage: 30 wt% to 95 wt% of $NaNO_3$ and 5 wt% to 70 wt% of $KNO_3$, and further comprises 0.01 wt% to 1 wt%, and preferably 0.01 wt% to 0.1 wt% of $LiNO_3$ based on a total mass of $NaNO_3$ and $KNO_3$.

19. The preparation method according to any one of technical solutions 9 to 18, wherein the chemical strengthening in step (4) is performed for 1 to 3 times.

20. The preparation method according to any one of technical solutions 9 to 19, wherein in step (1), the clarifying agent is selected from the group consisting of NaCl, $Sb_2O_3$, $As_2O_3$, nitrate, sulfate, and a combination thereof, and preferably, a mass percentage of the clarifying agent added to the base glass is 0.10 wt% to 1.00 wt%, and more preferably, the mass percentage of the clarifying agent added to the base glass is 0.50 wt% to 1.00 wt%; and/or in step (1), the melt molding is performed at 1400°C to 1650°C.

21. A strengthened glass-ceramic obtained by the preparation method according to any one of technical solutions 9 to 20.

22. Use of the strengthened glass-ceramic according to any one of technical solutions 1 to 8 or the strengthened glass-ceramic according to technical solution 21 as a protective cover in a mobile device.

When the strengthened glass-ceramic provided by the present application has following stress characteristics of $1.01\% \geq \Delta\alpha \geq 0.65\%$ ($\Delta\alpha = 5 \times 10^{-5} \times |CT\_AV| + 0.0026$), $(CS\_50/DOL\_0) \geq 0.332 \times$ (surface $CS/|CT\_CV|$), $DOL\_0 \geq 0.187t$, the average sandpaper drop resistance height can be 1.30 m to 1.80 m under a condition of 80-mesh sandpaper. Compared with those of the prior arts, the drop resistance of the strengthened glass-ceramic of the present application on rough ground is significantly improved, and the strengthened glass-ceramic can be used as a protective cover material for smart terminal products such as mobile phones.

## BRIEF DESCRIPTION OF THE DRAWINGS

Fig. 1 shows a DSC diagram of the base glass in Example 3 of the present application, which is heated to 1000°C at a rate of 10°C/min in nitrogen;
Fig. 2 shows a transmittance profile of the glass-ceramic in Example 3 of the present application at 200 nm to 1000 nm;
Fig. 3 shows an X-ray diffraction pattern of the glass-ceramic in Example 3 of the present application;
Fig. 4 shows a schematic diagram of dropping and breaking of the strengthened glass-ceramic of the present application.

## DETAILED DESCRIPTION

In order to solve the problem of insufficient drop resistance of glass-ceramics in the prior arts, the present application provides a transparent glass-ceramic with petalite and lithium disilicate as a main crystalline phase, which can be chemically strengthened to obtain a strengthened glass-ceramic. The strengthened glass-ceramic has a compressive stress layer on a surface and a tensile stress layer inside, and the tensile stress layer has the same components as that of the transparent glass-ceramic before strengthening because it has not undergone ion-exchange.

The strengthened glass-ceramic has the following stress characteristics: $DOL\_0 \geq 0.187\,t$, $t$ is a thickness of the glass-ceramic;

$$1.01\% \geq \Delta\alpha \geq 0.65\%, \ \Delta\alpha = 5 \times 10^{-5} \times |CT\_AV| + 0.0026;$$

$$(CS\_50/DOL\_0) \geq 0.332 \times (\text{surface } CS/|CT\_CV|);$$

$\Delta\alpha$ is a function positively related to an absolute value of the average tensile stress. When $\Delta\alpha > 1.01\%$ in strengthened glass-ceramic, the tensile stress of a glass-ceramic article will be too large, which will lead to a self-explosion of the glass-ceramic. When $\Delta\alpha < 0.65\%$, the tensile stress of the glass-ceramic article will be small, and the drop resistance will be poor.

$(CS\_50/DOL\_0)/(\text{surface } CS/|CT\_CV|)$ is a comprehensive relationship among surface compressive stress, central tensile stress and stress layer depth. When $(CS\_50/DOL\_0) < 0.332 \times$ (surface $CS/|CT\_CV|$), microcracks are easy to generate and expand inward when the glass contacts with sharp objects, thus reducing the drop resistance of the glass.

$DOL\_0$ is a depth of the compressive stress layer. When $DOL\_0 < 0.187\,t$, the compressive stress layer is relatively shallow, and the cracks generated are more likely to penetrate the compressive stress layer and reach the tensile stress zone when the glass contacts with sharp objects, thus reducing the drop resistance of the glass.

In the present application, a person skilled in the art can select a thickness of the strengthened glass-ceramic as required. For example, in some embodiments, the thickness of the strengthened glass-ceramic is 0.2 mm to 2.0 mm.

The present application relates to a range of components of a strengthened glass-ceramic, wherein a tensile stress layer of the strengthened glass-ceramic comprises the following oxides by weight percentages:

$SiO_2$: 65.00% to 75.00%,
$Al_2O_3$: 5.00% to 10.00%,
$P_2O_5$: 1.00% to 5.00%,
$CaO$: 0.10% to 3.00%,

$ZrO_2$: 1.00% to 10.00%,
$Na_2O$: 0% to 5.00%,
$Li_2O$: 5.00% to 15.00%,
$K_2O$: 0.10% to 3.00%, and
$B_2O_3$: 0% to 4.00%.

In a preferred embodiment, the tensile stress layer of the strengthened glass-ceramic comprises the following oxides by weight percentages:

$SiO_2$: 68.00% to 72.00%, preferably 70.00% to 72.00%,
$Al_2O_3$: 5.00% to 10.00%, preferably 6.00% to 8.00%,
$P_2O_5$: 1.00% to 3.00%, preferably 1.50% to 3.00%,
CaO: 0.10% to 1.00%, preferably 0.50% to 1.00%,
$ZrO_2$: 2.00% to 8.00%, preferably 5.00% to 7.00%,
$Na_2O$: 0% to 1.00%, preferably 0.05% to 0.60%,
$Li_2O$: 8.00% to 13.00%, preferably 9.00% to 12.00%,
$K_2O$: 0.10% to 1.00%, preferably 0.10% to 0.50%, and
$B_2O_3$: 0% to 2.00%, preferably 0.10% to 1.00%.

In a more preferred embodiment, the tensile stress layer of the strengthened glass-ceramic comprises the following oxides by weight percentages:

$SiO_2$: 70.06% to 71.65%,
$Al_2O_3$: 7.24% to 7.43%,
$P_2O_5$: 2.49% to 2.83%,
CaO: 0.77% to 0.98%,
$ZrO_2$: 5.40% to 6.11%,
$Na_2O$: 0.06% to 0.31%,
$Li_2O$: 11.10% to 11.95%,
$K_2O$: 0.13% to 0.37% and
$B_2O_3$: 0.21% to 0.91%.

In the strengthened glass-ceramic of the present application, a total content of petalite crystalline phase and lithium disilicate crystalline phase accounts for greater than or equal to 75 wt%, preferably greater than or equal to 79 wt%, and more preferably greater than or equal to 80 wt% of the strengthened glass-ceramic. The strengthened glass-ceramic are accompanied by possible heterogeneous phases such as quartz, spodumene, lithium metasilicate, etc. Lithium disilicate $Li_2Si_2O_5$ is an orthorhombic crystal, which is often flattened with an obvious cleavage plane. This crystalline phase forces cracks to expand along twisted grain boundaries due to its irregular orientation, which reduces the possibility of crack expansion. Petalite $LiAlSi_4O_{10}$ is a monoclinic crystal, with Li and O being tetrahedrally coordinated, and petalite can be chemically strengthened in a salt bath, where $Na^+$ in the salt bath replaces some of $Li^+$ in the petalite.

In some embodiments, the strengthened glass-ceramic of the present application contains a petalite crystalline phase and a lithium disilicate crystalline phase with a total content of 79 wt% to 97 wt%. In some embodiments, the strengthened glass-ceramic of the present application contains a petalite crystalline phase and a lithium disilicate crystalline phase with a total content of 79 wt%, 80.00 wt%, 81.00 wt%, 82.00 wt%, 83.00 wt%, 84.00 wt%, 85.00 wt%, 86.00 wt%, 87.00 wt%, 88.00 wt%, 89.00 wt%, 90.00 wt%, 91.00 wt%, 92.00 wt%, 93.00 wt%, 94.00 wt%, 95.00 wt%, 96.00 wt%, or 97.00 wt%, or any percentage within a numerical range of any two of the above specified values as endpoints. It should be understood that in specific embodiments, any of the above ranges may be combined with any other ranges as desired, as long as a glass with a desired property of the present application is obtained.

In some embodiments, the strengthened glass-ceramic has an average grain size of 10 nm to 50 nm, preferably 10 nm to 30 nm, and more preferably 10 nm to 20 nm. In some embodiments, the average grain size may be 10 nm, 12 nm, 14 nm, 16 nm, 18 nm, 20 nm, 22 nm, 24 nm, 26 nm, 28 nm, 30 nm, 35 nm, 38 nm, 40 nm, 45 nm, 48 nm, or 50 nm, or any value within a numerical range of any two of the above specified values as endpoints. It should be understood that in specific embodiments, any of the above ranges may be combined with any other ranges as desired, as long as the glass-ceramic of the present application is obtained.

The strengthened glass-ceramic of the present application also has the following stress characteristics:

surface CS: 200 MPa to 680 MPa;
CS_50: 100 MPa to 400 MPa;

CS_100: 20 MPa to 150 MPa;

|CT_CV|: 50 MPa to 210 MPa;

|CT_AV|: 55 MPa to 150 MPa;

CT_LD: 45000 MPa/mm to 90000 MPa/mm.

Drop resistance performance/anti-drop performance of the strengthened glass-ceramic:

The strengthened glass-ceramic has an average sandpaper drop resistance height of between 1.30 m and 1.80 m when the strengthened glass-ceramic with a thickness of 0.7 mm is tested for sandpaper drop resistance with an 80-mesh sandpaper.

The strengthened glass-ceramic has an average sandpaper drop resistance height of more than 2.00 m when the strengthened glass-ceramic with a thickness of 0.7 mm is tested for sandpaper drop resistance with an 120-mesh sandpaper.

The strengthened glass-ceramic has an average sandpaper drop resistance height of more than 2.50 m when the strengthened glass-ceramic with a thickness of 0.7 mm is tested for sandpaper drop resistance with an 180-mesh sandpaper.

Optical performance of the strengthened glass-ceramic:

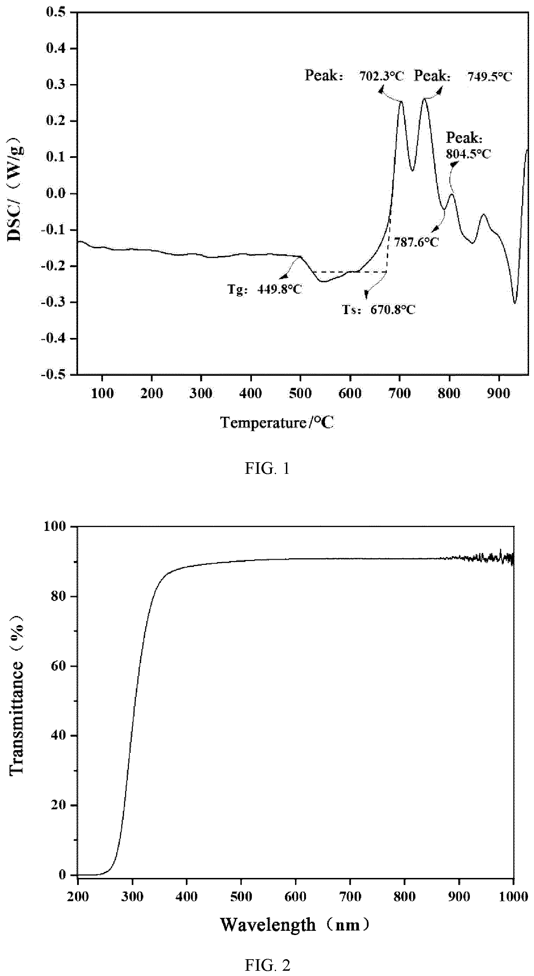

The strengthened glass-ceramic is tested for a transmittance under the light with the wavelength of 200 nm to 1000 nm, as shown in Fig. 2. As shown in Fig. 2, in the visible wavelengths, the transmittance of the strengthened glass-ceramic is high, and the transparency is good.

The strengthened glass-ceramic with a thickness of 0.7 mm is transparent and has a transmittance of not less than 90.00% for light at a wavelength of 550 nm.

According to the application, preparing the glass-ceramic with high crystal content by ceramic treatment of the lithium-aluminum-silica glass, and putting the glass-ceramic into a pure sodium salt or a mixed salt of lithium, sodium and potassium for chemical strengthening, so that the strengthened glass-ceramic can meet the stress characteristic requirements and obtain better drop resistance performance.

$SiO_2$, as a formation oxide of glass network, is an indispensable component of glass network structure. Properly increasing the content of $SiO_2$ can increase the stability and mechanical strength of the glass. However, excessive $SiO_2$ will increase the viscosity of glass and cause a difficulty in glass melting. Therefore, in the present application, when the content of $SiO_2$ is controlled at 65.00 wt% to 75.00 wt%, the effect of increasing the stability and formability of the glass is the best. In some embodiments, the weight percentage of $SiO_2$ is 68.00% to 72.0%. In some embodiments, the weight percentage of $SiO_2$ is 70.00% to 72.0%. In some embodiments, the weight percentage of $SiO_2$ is 70.06% to 71.65%. In some embodiments, the tensile stress layer of the strengthened glass-ceramic may comprise $SiO_2$ with a weight percentage of 65.00% to 71.00%, 66.00% to 71.00%, 67.00% to 71.00%, 68.00% to 71.00%, 68.00% to 69.50%, 67.00% to 69.50%, 68.00% to 71.00%, 67.30% to 71.00%, 67.50% to 71.00%, 67.70% to 71.00%, 68.20% to 71.00%, 68.50% to 71.00%, 68.80% to 71.00%, 69.00% to 71.00%, 69.00% to 69.80%, 69.00% to 69.50%, 69.00% to 69.30%, 69.50% to 70.00%, 70.00% to 70.50%, 71.00% to 71.50% or 71.50% to 72.00%. In some embodiments, the tensile stress layer of the strengthened glass-ceramic may comprise $SiO_2$ with a weight percentage of 65.00%, 66.00%, 67.00%, 67.10%, 67.20%, 67.30%, 67.40%, 67.50%, 67.60%, 67.70%, 67.80%, 67.90%, 68.00%, 68.10%, 68.20%, 68.30%, 68.40%, 68.50%, 68.60%, 68.70%, 68.80%, 68.90%, 69.00%, 69.10%, 69.20%, 69.30%, 69.40%, 69.50%, 69.60%, 69.70%, 69.80%, 69.90%, 71.00%, 72.00%, 73.00%, 74.00% or 75.00%, or any percentage within a numerical range of any two of the above specified values as endpoints. It should be understood that in specific embodiments, any of the above ranges may be combined with any other ranges, as long as a glass-ceramic of the present application is obtained.

$Al_2O_3$ is an intermediate oxide of glass formation, which can improve the chemical stability of the glass. At the same time, because the volume of $[AlO_4]$ is larger than that of $[SiO_4]$, it can provide more space for ion exchange, so alumina can promote ion exchange. However, excessive $Al_2O_3$ tends to increase the viscosity of the glass, and when alkaline earth metals exist, it will also increase the crystallization tendency of the glass. Therefore, the content of $Al_2O_3$ is controlled at 5.00 wt% to 10.00 wt% in the present application. In some embodiments, the weight percentage of $Al_2O_3$ is 6.00% to 8.00%. In some embodiments, the weight percentage of $Al_2O_3$ is 7.24% to 7.43%. In some embodiments, the tensile stress layer of the strengthened glass-ceramic may comprise $Al_2O_3$ with a weight percentage of 5.00%, 5.30%, 5.50%, 5.80%, 6.00%, 6.30%, 6.50%, 6.80%, 7.00%, 7.30%, 7.50%, 7.80%, 8.00%, 8.30%, 8.50%, 8.80%, 9.00%, 9.30%, 9.50%, 9.80% or 10.00%, or any percentage within a numerical range of any two of the above specified values as endpoints. It should be understood that in a specific embodiment, any of the above ranges can be combined with any other range as long as the glass-ceramic of the present application can be obtained.

$P_2O_5$ can be used as a formation oxide of glass network, which can promote the phase separation of glass, thus affecting the crystallization of glass. In the transparent glass-ceramic of $Li_2O$-$Al_2O_3$-$SiO_2$ system, the content of $P_2O_5$ is controlled at 1.00 wt% to 5.00 wt%. In some embodiments, the weight percentage of $P_2O_5$ can be 1.00% to 3.00%. In some embodiments, the weight percentage of $P_2O_5$ can be 1.50% to 3.00%. In some embodiments, the weight percentage of $P_2O_5$ can be 2.49 to 2.83%. In some embodiments, the tensile stress layer of the strengthened glass-ceramic may

comprise $P_2O_5$ with a weight percentage of 1.00%, 1.20%, 1.50%, 1.70%, 1.80%, 2.00%, 2.20%, 2.50%, 2.80%, 3.00%, 3.20%, 3.50%, 3.80%, 4.00%, 4.20%, 4.50%, 4.80% or 5.00%, or any percentage within a numerical range of any two of the above specified values as endpoints. It should be understood that in specific embodiments, any of the above ranges may be combined with any other ranges, as long as a glass-ceramic of the present application is obtained.

$ZrO_2$ is an intermediate oxide of glass formation, which can improve the chemical stability, hardness, scratch resistance and drop resistance of glass. At the same time, $ZrO_2$ is often used as a nucleating agent in glass-ceramic because of its high cationic charge and strong field. However, excessive $ZrO_2$ will greatly increase the viscosity of the glass and affect the glass forming ability. In the transparent glass-ceramic of $Li_2O-Al_2O_3-SiO_2$ system of the present application, the content of $ZrO_2$ is controlled at 1.00 wt% to 10.00 wt%. In some embodiments, the weight percentage of $ZrO_2$ can be 2.00 to 8.00%. In some embodiments, the weight percentage of $ZrO_2$ can be 5.00% to 7.00%. In some embodiments, the weight percentage of $ZrO_2$ can be 5.40% to 6.11%. In some embodiments, the tensile stress layer of the strengthened glass-ceramic may comprise $ZrO_2$ with a weight percentage of 1.00%, 1.20%, 1.40%, 1.60%, 1.80%, 2.00%, 2.20%, 2.40%, 2.60%, 2.80%, 3.00%, 3.20%, 3.40%, 3.60%, 3.80%, 4.00%, 4.20%, 4.40%, 4.60%, 4.80%, 5.00%, 5.20%, 5.40%, 5.60%, 5.80%, 6.00%, 6.20%, 6.40%, 6.60%, 6.80%, 7.00%, 7.20%, 7.40%, 7.60%, 7.80%, 8.00%, 8.20%, 8.40%, 8.60%, 8.80%, 9.00%, 9.20%, 9.40%, 9.6%, 9.8% or 10.0%, or any percentage within a numerical range of any two of the above specified values as endpoints. It should be understood that in specific embodiments, any of the above ranges may be combined with any other ranges, as long as a glass-ceramic of the present application is obtained.

CaO, as a modifier oxide of glass formation, helps to reduce the viscosity of glass, inhibits the crystallization of glass during glass forming, and improves the low-temperature melting of glass, but excessive CaO will reduce the devitrification resistance of glass. By adding a proper amount of CaO, the viscosity of glass can be reduced without affecting the crystallization performance of glass. Therefore, the content of CaO is controlled at 0.10 wt% to 3.00 wt% in this application. In some embodiments, the weight percentage of CaO is 0.10% to 1.00%. In some embodiments, the weight percentage of CaO is 0.50% to 1.00%. In some embodiments, the weight percentage of CaO is 0.77% to 0.98%. In some embodiments, the tensile stress layer of the strengthened glass-ceramic may comprise CaO with a weight percentage of 0.10%, 0.15%, 0.18%, 0.20%, 0.25%, 0.28%, 0.30%, 0.35%, 0.38%, 0.40%, 0.45%, 0.48%, 0.50%, 0.55%, 0.58%, 0.60%, 0.65%, 0.68%, 0.70%, 0.75%, 0.78%, 0.80%, 0.85%, 0.88%, 0.90%, 0.95%, 0.98%, 1.00%, 1.50%, 1.75%, 2.00%, 2.25%, 2.50%, 2.75% or 3.00%, or any percentage within a numerical range of any two of the above specified values as endpoints. It should be understood that in specific embodiments, any of the above ranges may be combined with any other ranges, as long as a glass-ceramic of the present application is obtained.

$Li_2O$, $Na_2O$ and $K_2O$, as a network modifier oxides of glass formation, can optimize a viscosity of the glass and promote melting and clarification of molten glass. At the same time, $Li_2O$ and $Na_2O$ can exchange ions with molten salt bath, and their contents are an important factor affecting the stress of glass. In addition, $Li_2O$ is also an essential chemical component for the formation of crystalline phases such as lithium disilicate ($Li_2Si_2O_5$), lithium metasilicate ($Li_2SiO_3$) and petalite ($LiAlSi_4O_{10}$). However, the free oxygen provided by $Li_2O$, $Na_2O$ and $K_2O$ will destroy the network structure of the glass, and affect the intrinsic strength of glass. Therefore, the present application controls the content of $Li_2O$ within 5.00 wt% to 15.00 wt%, the content of $Na_2O$ within 0 wt% to 5.00 wt% and the content of $K_2O$ within 0.10 wt% to 3.00 wt%.

In some embodiments, the content of $Li_2O$ is controlled at 8.00 wt% to 13.00 wt%. In some embodiments, the content of $Li_2O$ is controlled at 9.00 wt% to 12.00 wt%. In some embodiments, controlling the content of $Li_2O$ is controlled at 11.10 wt% to 11.95 wt%.

In some embodiments, the tensile stress layer of the strengthened glass-ceramic may comprise $Li_2O$ with a weight percentage of 5.00%, 5.50%, 6.00%, 6.50%, 7.00%, 7.50%, 8.00%, 8.10%, 8.15%, 8.20%, 8.25%, 8.30%, 8.35%, 8.40%, 8.45%, 8.50%, 8.55%, 8.60%, 8.65%, 8.70%, 8.75%, 8.80%, 8.85%, 8.90%, 8.95%, 8.90%, 8.95%, 9.00%, 9.10%, 9.15%, 9.20%, 9.25%, 9.30%, 9.35%, 9.40%, 9.45%, 9.50%, 9.55%, 9.60%, 9.65%, 9.70%, 9.75%, 9.80%, 9.85%, 9.90%, 9.95%, 10.00%, 10.10%, 10.15%, 10.20%, 10.25%, 10.30%, 10.35%, 10.40%, 10.45%, 10.50%, 10.55%, 10.60%, 10.65%, 10.70%, 10.75%, 10.80%, 10.85%, 10.90%, 10.95%, 11.00%, 11.10%, 11.15%, 11.20%, 11.25%, 11.30%, 11.35%, 11.40%, 11.45%, 11.50%, 11.55%, 11.60%, 11.65%, 11.70%, 11.75%, 11.80%, 11.85%, 11.90%, 11.95%, 12.00%, 12.10%, 12.15%, 12.20%, 12.25%, 12.30%, 12.35%, 12.40%, 12.45%, 12.50%, 12.55%, 12.60%, 12.65%, 12.70%, 12.75%, 12.80%, 12.85%, 12.90%, 12.95%, 13.00%, 13.50%, 14.00%, 14.50% or 15.00%, or any percentage within a numerical range of any two of the above specified values as endpoints. It should be understood that in specific embodiments, any of the above ranges may be combined with any other ranges, as long as a glass-ceramic of the present application is obtained.

In some embodiments, the content of $Na_2O$ is controlled at 0.01 wt% to 1.00 wt%. In some embodiments, the content of $Na_2O$ is controlled at 0.05 wt% to 0.60 wt%. In some embodiments, the content of $Na_2O$ is controlled at 0.06 wt% to 0.31 wt%.

In some embodiments, the tensile stress layer of the strengthened glass-ceramic may comprise $Na_2O$ with a weight percentage of 0.01%, 0.02%, 0.03%, 0.04%, 0.05%, 0.06%, 0.07%, 0.08%, 0.09%, 0.10%, 0.11%, 0.12%, 0.13%, 0.14%, 0.15%, 0.16%, 0.17%, 0.18%, 0.19%, 0.20%, 0.21%, 0.22%, 0.23%, 0.24%, 0.25%, 0.26%, 0.27%, 0.28%, 0.29%, 0.30%, 0.31%, 0.32%, 0.33%, 0.34%, 0.35%, 0.36%, 0.37%, 0.38%, 0.39%, 0.40%, 0.41%, 0.42%, 0.43%, 0.44%, 0.45%, 0.46%, 0.47%, 0.48%, 0.49%, 0.50%, 0.51%, 0.52%, 0.53%, 0.54%, 0.55%, 0.56%, 0.57%, 0.58%, 0.59%, 0.60%, 0.61%, 0.62%, 0.63%, 0.64%, 0.65%, 0.66%, 0.67%, 0.68%, 0.69%, 0.70%, 0.71%, 0.72%, 0.73%, 0.74%, 0.75%, 0.76%, 0.77%, 0.78%, 0.79%, 0.80%, 0.81%, 0.82%, 0.83%, 0.84%, 0.85%, 0.86%, 0.87%, 0.88%, 0.89%, 0.90%, 0.91%, 0.92%, 0.93%, 0.94%, 0.95%, 0.96%, 0.97%, 0.98%, 0.99%, 1.00%, 2.00%, 3.00%, 4.00% or 5.00%, or any percentage within a numerical range of any two of the above specified values as endpoints. It should be understood that in specific embodiments, any of the above ranges may be combined with any other ranges, as long as a glass-ceramic of the present application is obtained.

In some embodiments, the content of $K_2O$ is controlled at 0.10 wt% to 1.00 wt%. In some embodiments, the content of the $K_2O$ is controlled at 0.10 wt% to 0.50 wt%.

In some embodiments, the tensile stress layer of the strengthened glass-ceramic may comprise $K_2O$ with a weight percentage of 0.10%, 0.11%, 0.12%, 0.13%, 0.14%, 0.15%, 0.16%, 0.17%, 0.18%, 0.19%, 0.20%, 0.21%, 0.22%, 0.23%, 0.24%, 0.25%, 0.26%, 0.27%, 0.28%, 0.29%, 0.30%, 0.31%, 0.32%, 0.33%, 0.34%, 0.35%, 0.36%, 0.37%, 0.38%, 0.39%, 0.40%, 0.41%, 0.42%, 0.43%, 0.44%, 0.45%, 0.46%, 0.47%, 0.48%, 0.49%, 0.50%, 0.51%, 0.52%, 0.53%, 0.54%, 0.55%, 0.56%, 0.57%, 0.58%, 0.59%, 0.60%, 0.61%, 0.62%, 0.63%, 0.64%, 0.65%, 0.66%, 0.67%, 0.68%, 0.69%, 0.70%, 0.71%, 0.72%, 0.73%, 0.74%, 0.75%, 0.76%, 0.77%, 0.78%, 0.79%, 0.80%, 0.81%, 0.82%, 0.83%, 0.84%, 0.85%, 0.86%, 0.87%, 0.88%, 0.89%, 0.90%, 0.91%, 0.92%, 0.93%, 0.94%, 0.95%, 0.96%, 0.97%, 0.98%, 0.99%, 1.00%, 2.00% or 3.00%, or any percentage within a numerical range of any two of the above specified values as endpoints. It should be understood that in specific embodiments, any of the above ranges may be combined with any other ranges, as long as a glass-ceramic of the present application is obtained.

$B_2O_3$, as a fluxing agent in the process of glass formation, and can reduce the high-temperature viscosity of glass, accelerate the clarification of glass, and reduce the crystallization ability of glass. However, excessive $B_2O_3$ will reduce the chemical stability and mechanical strength of the glass. Therefore, the content of $B_2O_3$ is controlled at 0 wt% to 4.00 wt%. In some embodiments, the content of $B_2O_3$ is controlled at 0% to 2.00%. In some embodiments, the content of $B_2O_3$ is controlled at 0.10% to 1.00%. In some embodiments, the content of $B_2O_3$ is controlled at 0.21% to 0.91%. In some embodiments, the tensile stress layer of the strengthened glass-ceramic may comprise $B_2O_3$ with a weight percentage of 0.10%, 0.15%, 0.18%, 0.20%, 0.25%, 0.28%, 0.30%, 0.35%, 0.38%, 0.40%, 0.45%, 0.48%, 0.50%, 0.55%, 0.58%, 0.60%, 0.65%, 0.68%, 0.70%, 0.75%, 0.78%, 0.80%, 0.85%, 0.88%, 0.90%, 0.95%, 0.98%, 1.00%, 1.10%, 1.15%, 1.18%, 1.20%, 1.25%, 1.28%, 1.30%, 1.35%, 1.38%, 1.40%, 1.45%, 1.48%, 1.50%, 1.55%, 1.58%, 1.60%, 1.65%, 1.68%, 1.70%, 1.75%, 1.78%, 1.80%, 1.85%, 1.88%, 1.90%, 1.95%, 1.98%, 2.00%, 2.10%, 2.15%, 2.18%, 2.20%, 2.25%, 2.28%, 2.30%, 2.35%, 2.38%, 2.40%, 2.45%, 2.48%, 2.50%, 2.55%, 2.58%, 2.60%, 2.65%, 2.68%, 2.70%, 2.75%, 2.78%, 2.80%, 2.85%, 2.88%, 2.90%, 2.95%, 2.98%, 3.00%, 3.10%, 3.15%, 3.18%, 3.20%, 3.25%, 3.28%, 3.30%, 3.35%, 3.38%, 3.40%, 3.45%, 3.48%, 3.50%, 3.55%, 3.58%, 3.60%, 3.65%, 3.68%, 3.70%, 3.75%, 3.78%, 3.80%, 3.85%, 3.88%, 3.90%, 3.95%, 3.98% or 4.00%, or any percentage within a numerical range of any two of the above specified values as endpoints. It should be understood that in specific embodiments, any of the above ranges may be combined with any other ranges, as long as a glass-ceramic of the present application is obtained.

## Explanation of Terms

Base glass: it is a glass that has not been subjected to a nucleation treatment, a crystallization treatment, and a strengthening treatment.

Glass-ceramic: it is also known as microcrystalline glass, which is a class of solid composite materials containing both glass and crystal phases (or also known as microcrystalline phase and crystallization phases) prepared by targeted controlled crystallization of the base glass.

Nucleation: it is a growth of small crystal nucleus of a nucleating material in the glass by heat treatment.

Crystallization: it is a growth of some kind of crystals on the basis of nuclei in glass by heat treatment.

Crystalline phase: a crystalline phase is a microstructure of a crystal, which is a general term for a large number of crystalline solid phases.

CT_LD: tensile stress linear density, a ratio of a sum of tensile stresses of the strengthened glass-ceramic measured by SLP-2000 stress meter to the glass thickness.

The glass-ceramic is subjected to ion exchange in a salt bath to form a compressive stress layer (i.e., a strengthened layer), and a tensile stress layer is formed within the glass during the ion exchange process. Specifically, during chemical strengthening, ions with large radius in the salt bath exchange with ions with small radius in the glass, thus forming a compressive stress layer on a glass surface and a tensile stress layer inside the glass. Compared with the glass-ceramic before strengthening, the component of the compressive stress layer will change due to ion exchange. Because a depth of ion exchange is usually less than or equal to a thickness of the compressive stress layer, the component of the tensile stress layer in the glass will not change, that is, the component of the tensile stress layer is the same as that of the glass-ceramic before strengthening.

The tensile stress layer has an upper boundary spaced at a distance from the upper surface of the strengthened glass-ceramic and a lower boundary spaced at a distance from the lower surface of the strengthened glass-ceramic. A tensile stress curve is recorded and drawn as a curve, in which a Y-axis refers to the tensile stress at a point on a line segment, which is in the tensile stress layer and is perpendicular to both the upper and lower boundaries, with upper and lower endpoints falling on the upper and lower boundaries respectively, and an X-axis refers to a distance between said point and the upper boundary. A ratio of the definite integral of the tensile stress curve to a thickness of the strengthened microcrystalline glass is recorded as the tensile stress linear density, which is a ratio of a sum of tensile stresses of the strengthened microcrystalline glass measured by the SLP-2000 stress meter to the thickness of the glass.

|CT_AV|: it is an absolute value of an average tensile stress, specifically the absolute value of the average value of all tensile stresses in the tensile stress layer, obtained by the SLP-2000 stress meter test.

DOL_0: it is a depth of the compressive stress layer, specifically the distance from any surface of the strengthened glass-ceramic to the position where the compressive stress close to that surface is zero, obtained by SLP-2000 stress meter test.

|CT_CV|: it is an absolute value of the central maximum tensile stress or the maximum tensile stress, specifically the absolute value of the maximum value of all tensile stresses in the tensile stress layer, obtained by the SLP-2000 stress meter test.

Surface compressive stress: surface CS, glass-ceramic or glass-ceramic after chemical strengthening, the alkali metal ions having a smaller surface radius are replaced by the alkali metal ions having a larger radius, due to the "crowding" effect of the alkali metal ions having a larger radius, the glass surface thus generates compressive stresses, which is known as surface compressive stress. Surface CS is obtained by SLP-2000 stress meter.

CS_50: it is a compressive stress at a depth of 50 $\mu$m from the strengthened glass-ceramic surface.

CS_100: it is a compressive stress at a depth of 100 $\mu$m from the strengthened glass-ceramic surface.

Transmittance: it is a ratio of a radiant energy projected and transmitted through an object to a total radiant energy projected onto the object as the incident light flux leaves from an illuminated surface or an incident side of a medium to the other side.

Refractive index: it is a ratio of a speed of propagation of light in vacuum to the speed of propagation of light in a medium.

In the Examples and Comparative Examples of the present application, the transmittance of the glass-ceramic at a wavelength of 550 nm is an average of the transmittance measured at a wavelength of 550 nm for a plurality of glass samples from the same batch. At least 5 samples of glass-ceramic from each batch are taken for testing.

SOC: it is a photoelastic coefficient. Photoelasticity mainly refers to an anisotropic birefringence phenomenon that occurs in transparent materials after being subjected to a force. Through a measurement of stress optical coefficient and birefringence, the value of an internal residual stress (MPa) of a material can be obtained.

**Instruments and Test Methods**

Thickness of the glass: determined by micrometer test. The change in a thickness of the glass-ceramic before and after chemical strengthening was very small and negligible.

Crystal content test: X-ray diffractometer was used to test the glass-ceramic samples, to obtain an XRD diffraction peak curve, and then the X-ray diffractometer (Shimadzu XRD-6000) test result file (RAW format) was imported into the X-ray diffraction data Rietveld refining software (e.g., Gsas, Fullprof, Maud), and then fitted and calculated, and the crystal content in the glass-ceramic sample can be obtained. The ratio of the peak area of the fitted crystalline phase and the total peak area of the fitted crystalline phase is the crystal content. The X-ray diffractometer used in the present application was Shimadzu XRD-6000, and the diffraction angle range used for the test was $2\theta=10°$ to $50°$, the scanning speed was 6°/min, the operating voltage was 40 kV, and the operating current was 30 mA.

The average grain size (or also known as, the average size of a grain) was obtained as follows: the glass-ceramic samples were tested using an X-ray diffractometer, and the resultant data obtained from the XRD test were used to obtain the average grain size using Scherrer's formula $D = K\lambda/(\beta\cos\theta)$, with $\lambda$ being the wavelength of the X-rays, $\beta$ being the half-height width of the peaks, and K = 0.89.

Transmittance test: referring to the standard GB/T 7962.12-2010 Test Methods for Colorless Optical Glass Part 12: Intra-spectral Transmittance Ratio, the transmittance of the glass-ceramic was tested by a professional testing instrument. The testing instruments used in the present application are Konica Minolta Spectrophotometer CM-3600A from Japan and Shimadzu Ultraviolet Visible Spectrophotometer UV-2600.

Testing of surface compressive stress (surface CS), CS_50, CS_100, CT_AV, CT_CV, DOL_0: the test was performed using a stress meter SLP-2000 (ORIHARA, Japan) with a light source wavelength of 518 nm, SOC=25.5 (nm/cm)/MPa, refractive index = 1.54, and an exposure time of 300 $\mu$ sec.

To test the surface CS, CS_50, CS_100, CT_AV, CT_CV, DOL_0, it is necessary to put a drop of its special refractive solution on the stress meter, then wipe the strengthened glass-ceramic articles clean, put them on the test path, and test their values. The refractive index of the refractive solution used for SLP-2000 is 1.51.

The CT_LD correlates with the thickness of the glass sheet, the depth of strengthening and the average tensile stress and can be used to assess the drop resistance of the glass sheet. In the present application, the CT_LD satisfies the following equation:

$$CT\_LD = \frac{(1000d/2 - DOL\_0) \times |CT\_AV| \times 2}{d},$$

wherein, d denotes the thickness of the glass-ceramic sheet (the thickness of the glass in the following Examples and Comparative Examples of the present application is 0.7 mm), the unit is mm; DOL_0 denotes the depth of the compressive stress layer, the unit is $\mu$m; and CT_AV denotes the internal average tensile stress, and the absolute value is taken in the calculation, the unit is MPa. In the present application, in the equation for the calculation of the tensile stress linear density, the data is substituted into for the calculation in accordance with the requirements for the above mentioned units, and the calculation result is obtained, the unit is not involved in the calculation.

Differential scanning calorimetry (DSC) test: After grinding the sample, it passes through a 200-mesh sieve; the test conditions: room temperature to 1000°C, 10°C/min heating rate; the test instrument is Mettler-Toledo TGA/DSC3+ thermogravimetric and synchronous thermal analyzer, and the test result diagram may refer to Fig. 1.

Average sandpaper drop resistance height: the value obtained by dividing the sum of sandpaper drop resistance heights measured by multiple glass samples by the number of samples measured, which is used to characterize the cracking resistance of glass contact surface.

At least 10 samples from each batch were taken for testing the average height of sandpaper drop resistance

$$\langle h \rangle n = \frac{1}{n} \sum_{i=1}^{n} hi,$$

wherein n is the number of glass samples tested in each batch, and hi is the sandpaper drop resistance height of a single sample.

Among them, the test method of the sandpaper drop resistance height of a single sample is as follows:

Step 1: sticking a glass sample to be tested with a length, width and thickness of 158.8 mm×72.8 mm×0.7 mm on the front of a 200 g model machine;

Step 2: placing the model machine on a green LT-SKDL-CD type dropping machine, making the glass sample face the sandpaper, and impacting the sandpaper with 80-mesh, 120-mesh or 180-mesh directly below the model machine to simulate the normal dropping posture of the mobile phone.

If the glass sample is not broken, the drop height of the model machine will be increased regularly. For example, the dropping height starts from 0.4 m, and a drop impact is carried out on the sample. If it is not broken, it will drop again by increasing the height by 0.1 m each time until the glass sample is broken.

Step 3: recording the previous one dropping height of the glass sample when it is broken as the sandpaper drop resistance height. For example, if the drop height is 0.5 m when it is broken, the sandpaper drop resistance height of the sample is 0.4 m.

**The preparation method of the strengthened glass-ceramic of the present application includes the following steps:**

(1) Preparation of base glass.

Mixing components according to formulation for 30 minutes, then adding a clarifying agent after mixing evenly, and melting the mixture in a platinum crucible at 1400°C to 1650°C for 5 hours, followed by pouring it into a molding die for molding and cooling to 900°C. Then placing the resultant into an annealing furnace at 450°C to 600°C, preferably 450°C to 550°C, and annealing for 6 hours to 240 hours, preferably 6 hours to 120 hours, and then cooling to room temperature in the furnace to obtain the base glass.

The clarifying agent can be a substance selected from the group consisting of NaCl, $Sb_2O_3$, $As_2O_3$, nitrate, sulfate, and a combination thereof, and the mass percentage of the clarifying agent added to the base glass raw material is 0.10 wt% to 1.00 wt%, that is, an amount of the clarifying agent accounts for 0.10 wt% to 1.00 wt% of a total amount of the base glass raw material.

(2) Preparation of glass-ceramic.

A transparent glass-ceramic brick can be prepared by sequentially carrying out the following nucleation treatment and crystallization treatment on the base glass.

During the nucleation treatment, the temperature is raised to the nucleation temperature at a heating rate of 5°C/min to 20°C/min, preferably 10°C/min, the nucleation temperature is 500°C to 700°C, and the nucleation treatment time is 10 min to 1440 min. During the crystallization treatment, the temperature is raised to the crystallization temperature at a heating rate of 5°C/min to 20°C/min, preferably 10°C/min, the crystallization temperature is 640°C to 750°C, and the crystallization treatment time is 5 min to 1440 min. The nucleation treatment time herein refers to a holding time after the crystallization furnace was heated up to the set nucleation temperature at a set rate of heating. The crystallization treatment time herein refers to a holding time after the crystallization furnace after was heated up to the set crystallization temperature at a set rate of heating.

(3) Cold working of samples.

Subjecting the glass-ceramic brick obtained in step (2) to a cold working treatment, comprising a slicing treatment, a shape-correction treatment which can be performed to the glass-ceramic brick before the slicing treatment, a CNC treatment, a grinding treatment, and a polishing treatment can be carried out in turn after the slicing treatment, or at least one method of CNC treatment, grinding treatment, and polishing treatment was carried out after the slicing treatment for a modification treatment of a glass sheet. A glass-ceramic samples with desired size, such as a polished sheet with a length, width and thickness of 50 mm×50 mm×0.7 mm, or 158.8 mm×72.8 mm×0.7 mm, etc, is obtained.

(4) Chemical strengthening.

Subjecting the glass-ceramic sample (e.g., polished sheet) obtained above to chemical strengthening in a pure sodium salt or lithium-sodium-potassium mixed salt bath at 380°C to 550°C for 1 h to 24 h, wherein a sodium ion in the salt bath is provided by one or more of sodium nitrate, sodium sulfate, and sodium carbonate, a potassium ion in the salt bath is provided by any one of potassium nitrate, potassium sulfate, and potassium carbonate, and a lithium ion in the salt bath is provided by one or more of lithium nitrate, lithium sulfate, and lithium carbonate. The present application can preferably use the mixed salt of lithium nitrate, sodium nitrate and potassium nitrate for chemical strengthening.

In some embodiments, the components of the strengthened salt bath in the present application is 0.1 wt% to 100 wt% $NaNO_3$ and 0 wt% to 99.9 wt% $KNO_3$, and the content of $LiNO_3$ is 0 wt% to 10 wt% relative to the total weight of the salt bath.

The strengthened glass-ceramic of the present application and the preparation method thereof are described in detail below by means of specific embodiments.

**Examples**

Taking Example 3 as an example, the specific preparation process was as follows:

A total amount of 1000 g of various raw material powders were weighted into a blender according to the component percentages of base glass E shown in Table 1, and then 5 g of a clarifying agent (NaCl) was added, and mixed for 30 minutes. The resulting mixture was melted in a platinum crucible at 1650°C for 5 hours, then poured into a molding die for molding, and cooled to 900°C. The resultant was placed into an annealing furnace at 480°C for 12 hours, and then cooled with the furnace to room temperature (cooled to room temperature at a rate of about 5°C/min) to obtain a base glass sample brick. In other examples, the preparation method of base glass is the same as that of Example 3, in which the component percentages of base glass in Examples 1 to 6 and Comparative Examples 1 to 7 correspond to the component letters in Table 1 respectively, which are specifically described in Tables 2-2 and 2-1.

The base glass was put into an annealing furnace for a nucleation treatment and a crystallization treatment, the whole heating rate was set to be 10°C/min, the temperature was raised from room temperature to 545°C, and the temperature was kept at 545°C for 4 hours for the nucleation treatment; then the temperature was raised to 675°C, and kept at 675°C for 90 min for crystallization; and then cooled to room temperature with the furnace to obtain a glass-ceramic sample brick.

After shaping, slicing, CNC, flat grinding and polishing, the glass-ceramic sample sheet with desired size, such as a polished sheet with a length, width, and thickness of 50 mm×50 mm×0.7 mm, or 158.8 mm×72.8 mm×0.7 mm, etc., was obtained.

According to the salt bath proportion shown in Table 2-2, 700 g $NaNO_3$, 300 g $KNO_3$, and 0.3 g $LiNO_3$ were weighted (70wt% $NaNO_3$+30wt% $KNO_3$+0.03wt% $LiNO_3$, wherein 0.03 wt% $LiNO_3$ refers to an additional mass proportion of $LiNO_3$ relative to the total mass of the mixed salt composed of $NaNO_3$ and $KNO_3$), and put into a crucible and melted into a liquid state in a strengthened furnace at a temperature of 480°C. The obtained polished sheet was put into molten salt bath, strengthened once at 480°C for 7 hours, to obtain a strengthened glass-ceramic sheet.

The properties of the strengthened glass-ceramic were tested. After the stress was tested by SLP-2000, the whole machine drop test of sandpaper with different mesh numbers was carried out. The results are shown in Table 2-2.

Tables 2-1 and 2-2 show the specific conditions for strengthening the glass of Comparative Examples 1 to 7 and Examples 1 to 6, respectively, including the salt bath mass proportion, salt bath temperature and salt bath time (among them, Comparative Example 1 was subjected to secondary strengthening treatment (the salt baths used for strengthening treatment in the first strengthening and the second strengthening treatment are simply referred to as "first strengthening salt bath" and " second strengthening salt bath", respectively), other Examples and Comparative Examples were only strengthened once). After different strengthening treatments, various stress tests and drop experiments were carried out on the specific samples of different strengthened glass-ceramic. The specific stress test data and drop experiment data are summarized in Table 2-1 and Table 2-2 respectively.

From the Comparative Examples 1 to 7 in Table 2-1, it can be seen that when the strengthened glass-ceramic cannot meet the requirements of 1.01%≥Δα≥0.65%, (CS_50/DOL_0)≥0.332× (surface CS/|CT_CV|) and DOL_0≥0.187 t at the same time, in the 80-mesh sandpaper machine drop test, the average sandpaper drop resistance height of its strengthened glass-ceramic is 0.88 m to 1.15 m.

Examples 1 to 6 in Table 2-2 show that the surface CS of the strengthened glass-ceramic of the present application is greater than 270 MPa, which is in the range of 272 MPa to 428 MPa; CS_50 is greater than 164 MPa, which is in the range of 164.44 MPa to 245.83 MPa. CS_100 is greater than 59.55 MPa, which is in the range of 59.55 MPa to 91.81 MPa. |CT_CV| is greater than 113 MPa, which is in the range of 113.54 MPa to 145.86 MPa; |CT_AV| is greater than 85 MPa, which is in the range of 85.49 MPa to 101.19 MPa; DOL_0 is greater than 130 μm, which is in the range of 130.60 μm to 151.57 μm; CT_LD is greater than 50000 MPa/mm, which is in the range of 50477.18 MPa/mm to 60721.55 MPa/mm. The strengthened glass-ceramic of the application has the characteristics of 1.01%≥Δα≥0.65%, (CS_50/DOL_0)≥0.332×(surface CS/|CT_CV|) and DOL _0≥0.187 t, and the average sandpaper drop resistance height of the strengthened glass-ceramic can reach 1.31 m or more in the 80-mesh sandpaper machine drop test. From Tables 2-1 and 2-2, it can be seen that the larger the mesh number of drop sandpaper is for the same glass sample, the greater the average height of sandpaper drop resistance. The larger the mesh of sandpaper, the smaller the coated emery particles and the shallower the puncture depth.

In addition, Fig. 1 of the present application is a DSC diagram of the base glass in Example 3 of the present application (component of glass E), which is raised to 1000°C at a heating rate of 10°C/min in nitrogen. It can be seen from the figure that the nucleation temperature of the base glass of this formulation is 530°C to 550°C, and the crystallization temperature is 670°C to 700°C. Fig. 2 is a graph showing the transmittance of the glass-ceramic of Example 3 (component of glass E) in the range of 200 nm to 1000 nm measured by Shimadzu UV-2600 spectrophotometer. From this graph, it can be seen that the glass-ceramic of the present application has higher transmittance and better transparency in the visible wavelength.

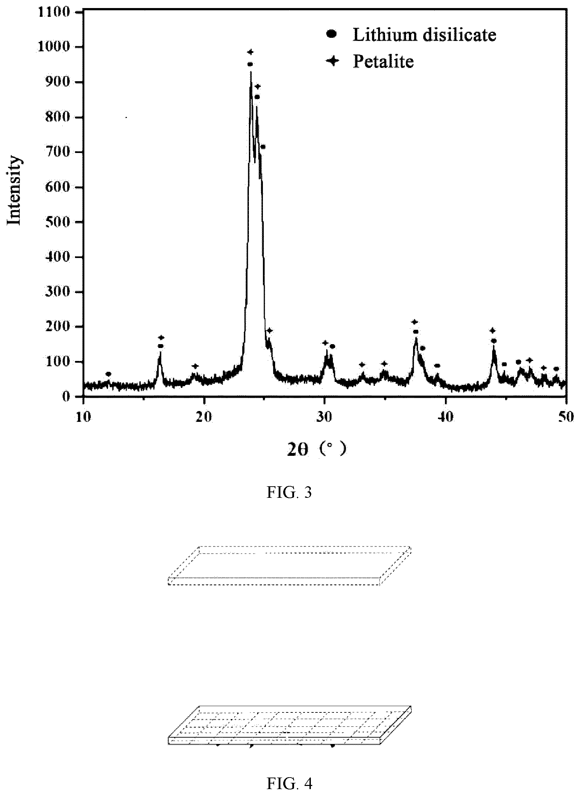

Fig. 3 is an X-ray diffraction pattern of the glass-ceramic of Example 3 (component of glass E) of the present application. From this diffraction pattern, it can be seen that the glass-ceramic of Example 3 mainly contains petalite and lithium disilicate crystalline phases.

**Table 1: Formulation, heat treatment, crystalline phase component and transmittance of glass-ceramic**

| Glass composition (wt%) | A | B | C | D | E | F |
|---|---|---|---|---|---|---|
| $SiO_2$ | 74.22% | 71.60% | 73.26% | 70.53% | 71.65% | 70.06% |
| $Al_2O_3$ | 7.50% | 7.11% | 7.22% | 7.09% | 7.24% | 7.43% |
| $P_2O_5$ | 2.00% | 2.45% | 2.03% | 2.46% | 2.49% | 2.83% |
| $ZrO_2$ | 4.32% | 4.81% | 3.56% | 4.38% | 5.40% | 6.11% |
| $Na_2O$ | 0.00% | 1.58% | 1.57% | 3.89% | 0.31% | 0.06% |
| $K_2O$ | 0.00% | 0.00% | 0.00% | 0.00% | 0.13% | 0.37% |
| $Li_2O$ | 11.55% | 10.83% | 11.00% | 10.77% | 11.10% | 11.95% |
| CaO | 0.00% | 0.00% | 0.00% | 0.00% | 0.77% | 0.98% |
| $B_2O_3$ | 0.00% | 1.62% | 1.36% | 0.88% | 0.91% | 0.21% |
| $SnO_2$ | 0.41% | 0.00% | 0.00% | 0.00% | 0.00% | 0.00% |

(continued)

| Glass composition (wt%) | A | B | C | D | E | F |
|---|---|---|---|---|---|---|
| Total | 100.00% | 100.00% | 100.00% | 100.00% | 100.00% | 100.00% |
| Nucleation temperature (°C) /Time (min) | 570/240 | 552/240 | 540/240 | 550/240 | 545/240 | 550/240 |
| Crystallization temperature (°C) /Time (min) | 740/240 | 670/240 | 660/240 | 680/240 | 675/90 | 670/90 |
| Crystallization heating rate (°C/min) | 10 | 10 | 10 | 10 | 10 | 10 |
| Main crystalline phase | Petalite, Lithium disilicate | Petalite, Lithium disilicate | Petalite, Lithium disilicate | Petalite, Lithium disilicate | Petalite, Lithium disilicate | Petalite, Lithium disilicate |
| crystalline phase content (wt%) | 86.32% | 79.84% | 85.75% | 83.37% | 83.84% | 80.93% |
| Average grain size /nm | 15.8 | 18.8 | 16.4 | 16.6 | 16.7 | 19.3 |
| 550 nm Transmittance (%) | 91.09 | 90.95 | 91.08 | 91.03 | 91.01 | 90.89 |

Table 2-1

| Number | Comparative Example 1 | Comparative Example 2 | Comparative Example 3 | Comparative Example 4 | Comparative Example 5 | Comparative Example 6 | Comparative Example 7 |
|---|---|---|---|---|---|---|---|
| Composition | A | B | C | D | D | E | E |
| Proportion of first strengthening salt bath/wt% | 40% $NaNO_3$ + 60% $KNO_3$ + 0.1% $LiNO_3$ | 100% $NaNO_3$ | 100% $NaNO_3$ | 100% $NaNO_3$ | 90% $NaNO_3$ + 10% $KNO_3$ | 95% $NaNO_3$ + 5% $KNO_3$ + 0.03% $LiNO_3$ | 100% $NaNO_3$ |
| Salt bath temperature/°C | 500 | 450 | 450 | 480 | 480 | 480 | 480 |
| Salt bath time/h | 6 | 11 | 8 | 2.5 | 2.5 | 13 | 5 |
| Proportion of second strengthening salt bath/wt% | 10% $NaNO_3$ + 90% $KNO_3$ + 0.1% $LiNO_3$ | — | — | — | — | — | — |
| Salt bath temperature/°C | 500 | — | — | — | — | — | — |
| Salt bath time/h | 5 | — | — | — | — | — | — |
| Surface CS/MPa | 193 | 285 | 271 | 183 | 170 | 231 | 370 |
| CS_50/MPa | 102.46 | 154.87 | 126.69 | 105.76 | 100.33 | 122.15 | 184.56 |
| CS_100/MPa | 39.62 | 51.11 | 43.61 | 39.34 | 38.98 | 32.94 | 41.56 |
| \|CT_CV\|/MPa | 89.32 | 90.30 | 79.15 | 69.38 | 80.41 | 84.09 | 101.13 |
| \|CT_AV\|/MPa | 80.11 | 65.57 | 51.02 | 49.94 | 79.92 | 63.53 | 80.63 |
| DOL_0 (μm) | 143.64 | 134.82 | 127.05 | 138.34 | 152.32 | 124.23 | 120.42 |
| CT_LD (MPa/mm) | 47232.86 | 40313.00 | 32499.89 | 30200.51 | 45138.82 | 40978.09 | 52889.44 |
| 1.01%≥Δα≥0.65% | 0.66% | 0.59% | 0.52% | 0.51% | 0.66% | 0.58% | 0.66% |
| (CS_50/DOL_0)/ (Surface CS/\| CT_CV\|)≥0.332 | 0.330 | 0.364 | 0.291 | 0.290 | 0.311 | 0.358 | 0.419 |
| Thickness of galss-ceramict (mm) | 0.7 | 0.7 | 0.7 | 0.7 | 0.7 | 0.7 | 0.7 |
| DOL_0/t≥0.187 | 0.205 | 0.193 | 0.181 | 0.198 | 0.218 | 0.177 | 0.172 |
| 80-Mesh, An average sandpaper drop resistance height (m) | 1.15 | 0.95 | 0.88 | 0.9 | 0.99 | 0.94 | 1.13 |

(continued)

| Number | Comparative Example 1 | Comparative Example 2 | Comparative Example 3 | Comparative Example 4 | Comparative Example 5 | Comparative Example 6 | Comparative Example 7 |
|---|---|---|---|---|---|---|---|
| Composition | A | B | C | D | D | E | E |
| 120-Mesh, An average sandpaper drop resistance height (m) | 1.68 | / | 1.51 | / | / | / | / |
| 180-Mesh, An average sandpaper drop resistance height (m) | 2.01 | / | 1.98 | / | / | / | / |
| Note: In the table, "/' indicates that it does not exist or has not been determined. | | | | | | | |

**Table 2-2**

| Number | Example 1 | Example 2 | Example 3 | Example 4 | Example 5 | Example 6 |
|---|---|---|---|---|---|---|
| Composition | E | E | E | E | E | F |
| Proportion of first strengthening salt bath/wt% | 100% $NaNO_3$ | 95% $NaNO_3$ + 5% $KNO_3$ +0.03 % $LiNO_3$ | 70% $NaNO_3$ + 30% $KNO_3$ +0.03 % $LiNO_3$ | 60% $NaNO_3$ + 40% $KNO_3$ +0.03 % $LiNO_3$ | 30% $NaNO_3$ + 70% $KNO_3$ +0.03 % $LiNO_3$ | 100% $NaNO_3$ |
| Salt bath temperature /°C | 480 | 480 | 480 | 480 | 450 | 450 |
| Salt bath time/h | 9 | 11 | 7 | 8 | 9 | 11 |
| Proportion of second strengthening salt bath/wt% | / | / | / | / | / | / |
| Salt bath temperature /°C | / | / | / | / | / | / |
| Salt bath time/h | / | / | / | / | / | / |
| Surface CS/MPa | 362 | 317 | 352 | 338 | 272 | 428 |
| CS_50/MPa | 204.91 | 195.27 | 191.19 | 201.73 | 164.44 | 245.83 |
| CS_100/MPa | 73.06 | 88.91 | 59.55 | 82.61 | 71.10 | 91.81 |
| \|CT_CV\|/MPa | 133.34 | 145.86 | 113.54 | 128.50 | 129.73 | 137.34 |
| \|CT_AV\|/MPa | 95.65 | 97.74 | 85.49 | 91.12 | 87.02 | 101.19 |
| DOL_0(μm) | 136.66 | 151.57 | 130.60 | 144.38 | 146.97 | 139.97 |
| CT_LD(MPa/mm) | 58302.80 | 55412.73 | 53584.03 | 53527.83 | 50477.18 | 60721.55 |
| 1.01%≥Δα≥0.65% | 0.74% | 0.75% | 0.69% | 0.72% | 0.70% | 0.77% |
| (CS_50/DOL_0)/(Surface CS/\|CT_CV\|)≥0.332 | 0.552 | 0.592 | 0.472 | 0.531 | 0.533 | 0.564 |
| Thickness of galss-ceramic t (mm) | 0.7 | 0.7 | 0.7 | 0.7 | 0.7 | 0.7 |
| DOL_0/t≥0.187 | 0.195 | 0.217 | 0.187 | 0.206 | 0.210 | 0.200 |
| 80-Mesh, An average sandpaper drop resistance height (m) | 1.43 | 1.39 | 1.40 | 1.38 | 1.31 | 1.49 |
| 120-Mesh, An average sandpaper drop resistance height (m) | 2.15 | / | / | / | / | 2.21 |
| 180-Mesh, An average sandpaper drop resistance height (m) | >2.5 | / | / | / | / | >2.5 |

Note: Since the upper limit of the dropping machine used for drop resistance test is 2.5 m, if the glass is still unbroken after reaching the upper limit test height, it is judged that the average sandpaper drop resistance height of the glass is greater than 2.5 m. In the table, "/" indicates that it does not exist or has not been determined.

**Claims**

1. A strengthened glass-ceramic, comprising a petalite crystalline phase and a lithium disilicate crystalline phase, wherein the strengthened glass-ceramic has a compressive stress layer formed by chemical strengthening on a surface and a tensile stress layer inside; and

wherein, in the strengthened glass-ceramic:

$DOL\_0 \geq 0.187\,t$, $t$ is a thickness of the strengthened glass-ceramic;

$$1.01\% \geq \Delta\alpha \geq 0.65\%,\ \Delta\alpha = 5 \times 10^{-5} \times |CT\_AV| + 0.0026;$$

$$(CS\_50/DOL\_0) \geq 0.332 \times (\text{surface } CS/|CT\_CV|);$$

wherein:

surface CS: surface compressive stress, measured in MPa;
CS_50: compressive stress at a depth of 50 $\mu$m from a glass surface, measured in MPa;
CT_AV: average tensile stress in the tensile stress layer, measured in MPa;
CT_CV: maximum tensile stress in the tensile stress layer, measured in MPa; and
DOL_0: a depth of the compressive stress layer, measured in $\mu$m.

2. The strengthened glass-ceramic according to claim 1, wherein the tensile stress layer of the strengthened glass-ceramic comprises the following oxides by weight percentages:

$SiO_2$: 65.00% to 75.00%,
$Al_2O_3$: 5.00% to 10.00%,
$P_2O_5$: 1.00% to 5.00%,
CaO: 0.10% to 3.00%,
$ZrO_2$: 1.00% to 10.00%,
$Na_2O$: 0% to 5.00%,
$Li_2O$: 5.00% to 15.00%,
$K_2O$: 0.10% to 3.00%, and
$B_2O_3$: 0% to 4.00%.

3. The strengthened glass-ceramic according to claim 1, wherein the tensile stress layer of the strengthened glass-ceramic comprises the following oxides by weight percentages:

$SiO_2$: 68.00% to 72.00%,
$Al_2O_3$: 5.00% to 10.00%,
$P_2O_5$: 1.00% to 3.00%,
CaO: 0.10% to 1.00%,
$ZrO_2$: 2.00% to 8.00%,
$Na_2O$: 0% to 1.00%,
$Li_2O$: 8.00% to 13.00%,
$K_2O$: 0.10% to 1.00%, and
$B_2O_3$: 0% to 2.00%.

4. The strengthened glass-ceramic according to claim 1, wherein the tensile stress layer of the strengthened glass-ceramic comprises the following oxides by weight percentages:

$SiO_2$: 70.00% to 72.00%,
$Al_2O_3$: 6.00% to 8.00%,
$P_2O_5$: 1.50% to 3.00%,
CaO: 0.50% to 1.00%,
$ZrO_2$: 5.00% to 7.00%,
$Na_2O$: 0.05% to 0.60%,
$Li_2O$: 9.00% to 12.00%,
$K_2O$: 0.10% to 0.50%, and
$B_2O_3$: 0.10% to 1.00%.

5. The strengthened glass-ceramic according to claim 1, wherein the tensile stress layer of the strengthened glass-ceramic comprises the following oxides by weight percentages:

$SiO_2$: 70.06% to 71.65%,
$Al_2O_3$: 7.24% to 7.43%,
$P_2O_5$: 2.49% to 2.83%,
CaO: 0.77% to 0.98%,
$ZrO_2$: 5.40% to 6.11%,
$Na_2O$: 0.06% to 0.31%,
$Li_2O$: 11.10% to 11.95%,
$K_2O$: 0.13% to 0.37%, and
$B_2O_3$: 0.21% to 0.91%.

6. The strengthened glass-ceramic according to any one of claims 1 to 5, wherein the strengthened glass-ceramic has a total content of the petalite crystalline phase and the lithium disilicate crystalline phase of greater than or equal to 75 wt%.

7. The strengthened glass-ceramic according to any one of claims 1 to 6, wherein the strengthened glass-ceramic has an average sandpaper drop resistance height of between 1.30 m and 1.80 m when the strengthened glass-ceramic with a thickness of 0.7 mm is tested for sandpaper drop resistance with an 80-mesh sandpaper.

8. The strengthened glass-ceramic according to any one of claims 1 to 7, wherein the strengthened glass-ceramic with a thickness of 0.7 mm is transparent and has a transmittance of not less than 90.00% for light at a wavelength of 550 nm.

9. A preparation method of the strengthened glass-ceramic according to any one of claims 1 to 8, comprising the following steps:

(1) preparing a base glass: mixing glass raw materials, adding with a clarifying agent, and forming the base glass by melt molding and annealing;
(2) preparing a glass-ceramic: subjecting the base glass obtained in step (1) to a nucleation treatment and a crystallization treatment to obtain the glass-ceramic;
(3) subjecting the glass-ceramic obtained in step (2) to cold working to obtain a polished sheet; and
(4) subjecting the polished sheet obtained in step (3) to chemical strengthening to obtain a strengthened glass-ceramic.

10. The preparation method according to claim 9, wherein, in step (1), an annealing temperature is 450°C to 600°C, preferably 450°C to 550°C, and an annealing time is 6 hours to 240 hours, preferably 6 hours to 120 hours.

11. The preparation method according to claim 9 or 10, wherein in step (2), a nucleation temperature is 500°C to 700°C, preferably 540°C to 570°C, and preferably, a nucleation time is 10 min to 1440 min.

12. The preparation method according to claim 11, wherein in step (2), during the nucleation treatment, the temperature is raised to the nucleation temperature at a heating rate of 5°C/min to 20°C/min, preferably at a heating rate of 10°C/min.

13. The preparation method according to any one of claims 9 to 12, wherein in step (2), during the crystallization treatment, a crystallization temperature is 640°C to 750°C, preferably 660°C to 740°C or 670°C to 740°C, and preferably, a crystallization treatment time is 5 min to 1440 min.

14. The preparation method according to claim 13, wherein in step (2), during the crystallization treatment, the temperature is raised to the crystallization temperature at a heating rate of 5°C/min to 20°C/min, preferably at a heating rate of 10°C/min.

15. The preparation method according to any one of claims 9 to 14, wherein step (4) is performed by subjecting the polished sheet obtained in step (3) to chemical strengthening in a pure sodium salt bath or a lithium-sodium-potassium mixed salt bath at 380°C to 550°C, for a strengthening time of preferably 1 hour to 24 hours.

16. The preparation method according to claim 15, wherein, in step (4), a sodium ion in the salt bath is provided by one or more of sodium nitrate, sodium sulfate, and sodium carbonate; a potassium ion in the salt bath is provided by one or more of potassium nitrate, potassium sulfate, and potassium carbonate; and a lithium ion in the salt bath is provided by one or more of lithium nitrate, lithium sulfate, and lithium carbonate.

17. The preparation method according to claim 15 or 16, wherein the lithium-sodium-potassium mixed salt bath comprises the following components in terms of mass percentage: 0.1 wt% to 100 wt% of $NaNO_3$ and 0 wt% to 99.9 wt% of $KNO_3$; and further comprises 0 wt% to 10 wt% of $LiNO_3$ based on a total mass of $NaNO_3$ and $KNO_3$.

18. The preparation method according to claim 15 or 16, wherein the lithium-sodium-potassium mixed salt bath comprises the following components in terms of mass percentage: 30 wt% to 95 wt% of $NaNO_3$ and 5 wt% to 70 wt% of $KNO_3$; and further comprises 0.01 wt% to 1wt%, preferably 0.01 wt% to 0.1 wt%, of $LiNO_3$ based on a total mass of $NaNO_3$ and $KNO_3$.

19. The preparation method according to any one of claims 9 to 18, wherein the chemical strengthening in step (4) is performed for 1 to 3 times.

20. The preparation method according to any one of claims 9 to 19, wherein, in step (1), the clarifying agent is selected from the group consisting of NaCl, $Sb_2O_3$, $As_2O_3$, nitrate, sulfate, and a combination thereof; and preferably, a mass percentage of the clarifying agent added to the base glass is 0.10 wt% to 1.00 wt%, and more preferably, the mass percentage of the clarifying agent added to the base glass is 0.50 wt% to 1.00 wt%; and/or in step (1), the melt molding is performed at 1400°C to 1650°C.

21. A strengthened glass-ceramic obtained by the preparation method according to any one of claims 9 to 20.

22. Use of the strengthened glass-ceramic according to any one of claims 1 to 8 or the strengthened glass-ceramic according to claim 21 as a protective cover in a mobile device.

FIG. 1

FIG. 2

FIG. 3

FIG. 4

## INTERNATIONAL SEARCH REPORT

| International application No. |
| --- |
| **PCT/CN2023/107103** |

**A.    CLASSIFICATION OF SUBJECT MATTER**

C03C10/12(2006.01)i;   C03C10/04(2006.01)i;   C03C21/00(2006.01)i

According to International Patent Classification (IPC) or to both national classification and IPC

**B.    FIELDS SEARCHED**

Minimum documentation searched (classification system followed by classification symbols)

C03C10/-; C03C21/-

Documentation searched other than minimum documentation to the extent that such documents are included in the fields searched

Electronic data base consulted during the international search (name of data base and, where practicable, search terms used)

CNABS, CNTXT, ENTXTC, VEN, CNKI, WEB OF SCIENCE: 重庆鑫景, 华为, 微晶玻璃, 玻璃陶瓷, ?氧化?磷, ?氧化?铝, ?氧化?硼, ?氧化硅, ?氧化锆, 氧化钙, 氧化钾, 氧化钠, 氧化锂, 成核, 核化, 硅酸锂, 化学强化, 离子交换, 化学钢化, 晶化, 透锂长石, 抗摔, 跌落, B2O3, CAO, K2O, LI2O, NA2O, P2O5, SIO2, ZRO2, AL?O?, LIALSI4O10, LI2SI2O5, microcrystalline glass, glass ceramic, crystalliz+, ion exchange, anti fall, petalite, lithium disilicate

**C.    DOCUMENTS CONSIDERED TO BE RELEVANT**

| Category* | Citation of document, with indication, where appropriate, of the relevant passages | Relevant to claim No. |
| --- | --- | --- |
| X | CN 114671618 A (QINGYUAN CSG ENERGY SAVING NEW MATERIAL CO., LTD. et al.) 28 June 2022 (2022-06-28)<br>     description, paragraphs 3-43 and 93 | 1-22 |
| X | CN 113402172 A (CHENGDU GUANGMING PHOTO-ELECTRIC CO., LTD.) 17 September 2021 (2021-09-17)<br>     description, paragraphs 4-59 | 1-22 |
| A | CN 111099829 A (CDGM GLASS CO., LTD.) 05 May 2020 (2020-05-05)<br>     entire document | 1-22 |
| A | CN 112645600 A (CHONGQING XINJING SPECIAL GLASS CO., LTD.) 13 April 2021 (2021-04-13)<br>     entire document | 1-22 |
| A | CN 113754290 A (CDGM GLASS CO., LTD.) 07 December 2021 (2021-12-07)<br>     entire document | 1-22 |

☑ Further documents are listed in the continuation of Box C.      ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **18 October 2023** | **24 October 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/107103** |

**C.    DOCUMENTS CONSIDERED TO BE RELEVANT**

| Category* | Citation of document, with indication, where appropriate, of the relevant passages | Relevant to claim No. |
|---|---|---|
| A | CN 114605074 A (SHENZHEN XINFLAG SHORE SCIENCE AND TECHNOLOGY CO., LTD.) 10 June 2022 (2022-06-10)<br>entire document | 1-22 |
| A | WO 2020135280 A1 (HUAWEI TECHNOLOGIES CO., LTD.) 02 July 2020 (2020-07-02)<br>entire document | 1-22 |

Form PCT/ISA/210 (second sheet) (July 2022)

INTERNATIONAL SEARCH REPORT
Information on patent family members

International application No.

**PCT/CN2023/107103**

| Patent document cited in search report | | | Publication date (day/month/year) | Patent family member(s) | | | Publication date (day/month/year) |
|---|---|---|---|---|---|---|---|
| CN | 114671618 | A | 28 June 2022 | None | | | |
| CN | 113402172 | A | 17 September 2021 | None | | | |
| CN | 111099829 | A | 05 May 2020 | CN | 111099829 | B | 09 March 2021 |
| CN | 112645600 | A | 13 April 2021 | CN | 112645600 | B | 15 July 2022 |
| | | | | WO | 2021213224 | A1 | 28 October 2021 |
| CN | 113754290 | A | 07 December 2021 | None | | | |
| CN | 114605074 | A | 10 June 2022 | None | | | |
| WO | 2020135280 | A1 | 02 July 2020 | EP | 3851420 | A1 | 21 July 2021 |
| | | | | EP | 3851420 | A4 | 24 November 2021 |
| | | | | US | 2021317032 | A1 | 14 October 2021 |
| | | | | CN | 111377614 | A | 07 July 2020 |
| | | | | CN | 111377614 | B | 18 February 2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210869057X
- CN 201980020541
- CN 202010348413
- GB 7962122010 T